# EUROPÄISCHE PATENTSCHRIFT

(11) **EP 0 970 142 B1**
(45) Veröffentlichungstag und Bekanntmachung des Hinweises auf die Patenterteilung: **11.06.2003**
(21) Anmeldenummer: 98916959.4
(22) Anmeldetag: 16.03.1998
(51) Int. Cl.: C08K 5/00, C08J 7/00

(54) **VERWENDUNG VON AMPHIPHILEN ZUR DAUERHAFTEN VERBESSERUNG DER KLEBSTOFF- UND/ODER BESCHICHTUNGS-KOMPATIBILITÄT VON POLYOLEFIN-BASIERTEN FORMKÖRPERN**
USE OF AMPHIPHILES FOR PERMANENT IMPROVEMENT OF ADHESIVE AND/OR COATING COMPATIBILITY OF POLYOLEFIN BASED SHAPED BODIES
UTILISATION D'AMPHIPHILES POUR AMELIORATION DURABLE DE LA COMPATIBILITE D'ADHESIF ET/OU DE REVETEMENT DE CORPS MOULES A BASE DE POLYOLEFINES

(30) Priorität: 25.03.1997 DE 19712380
(43) Veröffentlichungstag der Anmeldung: 12.01.2000
(73) Patentinhaber: Cognis Deutschland GmbH & Co. KG, 40589 Düsseldorf (DE)
(72) Erfinder: BIRNBRICH, Paul, D-42719 Solingen (DE); FISCHER, Herbert, D-40229 Düsseldorf (DE); KLAMANN, Jörg-Dieter, D-27574 Bremerhaven (DE); SCHÄFER, Martin, D-47807 Krefeld (DE); TENHAEF, Rolf, D-40627 Düsseldorf (DE)
(86) Internationale Anmeldenummer: EP9801511
(87) Internationale Veröffentlichungsnummer: WO98042776

(56) Entgegenhaltungen:
- WO-A-88/07564
- WO-A-97/12694
- US-A- 3 314 813
- US-A- 3 316 232
- US-A- 4 393 159

## Beschreibung

Die Erfindung betrifft die Verwendung von Amphiphilen zur dauerhaften Verbesserung der Klebstoff- und/oder Beschichtungs-Kompatibilität von Polyolefin-basierten Formkörpern, Fasern und Folien.

### Stand der Technik

Formgestaltete Werkstücke beliebiger Raumform, einschließlich Formkörpern, Fasern und Folien auf Polyolefinbasis finden heute in breitestem Umfange praktische Verwendung. Ein wichtiger Problembereich liegt hier in der Verbesserung der Oberflächeneigenschaften dieser aufgrund ihrer Struktur unpolaren Kohlenwasserstoffverbindungen. So ist die mangelnde Haftfestigkeit gegenüber Beschichtungen und Verklebungen ein zentrales Problem, zu dessen Lösung seit Jahrzehnten zahlreiche Vorschläge gemacht worden sind. Eine zusammenfassende Darstellung der unterschiedlichen Ansätze zur hier angesprochenen Problematik finden sich beispielsweise in der EP-A-311723, auf deren Angaben hier verwiesen wird.

Stand der Technik ist es, die Kompatibilität der Kunststoff-Oberfläche gegenüber Beschichtungen und Verklebungen durch beispielsweise oxidative Nachbehandlungsverfahren wie Corona- oder Plasmabehandlung zu verbessern. Hierbei wird der Kunststoff in Gegenwart von Gasen und Entladungen an der Oberfläche oxidiert oder chemisch modifiziert, wodurch sich gewisse Oberflächen-Eigenschaften des Kunststoffs modifizieren lassen. Diese Methoden erfordern jedoch neben einem hohen Energieeinsatz stets einen zusätzlichen Arbeitsgang und führen zu Ozonemissionen bei der Fertigung von Kunststoffteilen.

Daneben sind chemische Vorbehandlungsverfahren wie z.B. das Behandeln mit Fluor- oder Chlorgas, mit Chromschwefelsäure oder Fluorsulfonsäure, usw. seit längerem bekannt.

**EP-B-372 890** beschreibt Fasern auf Polyolefin- oder Polyester-Basis mit einem mit der Oberfläche verhafteten Schmiermittel. Dieses Schmiermittel umfaßt eine Mischung aus (1) Fettsäurediethanolamid, (2) einem Polyether-modifizierten Silikon, (3) einem Sorbitan-Fettsäureester und (4) einem Metallsalz eines Alkylsulfonats; dabei liegen die Komponenten (1) bis (4) in speziellen Mengenverhältnissen vor. Gemäß Seite 3, Zeilen 20-26 wird die Mischung der Komponenten (1) bis (4) auf die Oberfläche aufgebracht. Diese Technik des Aufbringens der die vier Komponenten enthaltenden Mischung auf die Oberfläche bereits fertiger Fasern wird auch auf Seite 4, Zeilen 6-9 nochmals näher erläutert. Dort sind als Aufbring-Techniken genannt: a) der Einsatz von Rollen, b) ein Aufsprühen und c) das Eintauchen. Es handelt sich demnach um ein Verfahren, bei dem eine Mischung der Komponenten (1) bis (4) in einem zusätzlichen Verarbeitungsschritt auf die Oberfläche von Polyolefin-Formteilen aufgebracht wird. Der in Anspruch 1 der EP-B-372 890 verwendete Ausdruck "mit der Faseroberfläche verhaftet" ist demnach vom Fachmann klar in der Weise zu verstehen, daß es sich dabei lediglich um eine lockere und temporäre Haftung - etwa durch relativ schwache Adhäsionskräfte - handelt, keinesfalls aber um eine dauerhafte Verankerung.

Aus **US-A-5 045 387** ist die Behandlung von Fasern oder Folien auf Polyolefin-Basis bekannt, bei dem auf die Oberfläche spezielle polyalkoxylierte Polydimethylsiloxane oder alkokoxylierte Ricinolsäure-Derivate aufgebracht werden.

Im Hinblick auf die sehr verbreiteten klassischen chemischen Nachbehandlungsverfahren wie Corona- und Plasmabehandlung ist dem Fachmann bekannt, daß sich keine genauen Aussagen über die ablaufenden Prozeßvorgänge machen lassen. Es gilt jedoch als erwiesen, daß sich oxidative Veränderungen der Oberfläche ergeben und dadurch gewisse "aktive Zentren" entstehen. Deren Konzentration geht jedoch in der Regel mit der Zeit zurück, so daß auch der Vorbehandlungseffekt nur über einen bestimmten Zeitraum, meist nicht über 72 Stunden hinaus, erhalten bleibt. (Vergleiche dazu etwa: **Klaus Stoeckert (Herausgeber), "Veredeln von Kunststoff-Oberflächen",** München 1974, Seite 137).
Den aus dem Stand der Technik bekannten Methoden ist insgesamt gemeinsam, daß die angestrebten Oberflächen-Wirkungen in der Regel nur temporär vorhanden sind.

**EP-B-616 622** betrifft extrudierbare, kompostierbare Polymerzusammensetzungen, umfassend ein extrudierbares, thermoplastisches Polymer, Copolymer oder Mischungen davon, die ein abbauförderndes System aus einem autooxidativen Bestandteil und einem Übergangsmetall enthält. Das autooxidative System umfaßt dabei eine Fettsäure, eine substituierte Fettsäure oder Derivate oder Mischungen davon, wobei die Fettsäure 10 bis 22 C-Atome aufweist und mindestens 0,1 Gew.-% ungesättigter Verbindungen und mindestens 0,1 Gew.-% freie Säure enthält. Das Übergangsmetall ist in der Zusammensetzung in einer Menge von 5-500 ppm in Form eines Salzes enthalten und ausgewählt aus der Gruppe Kobalt, Mangan, Kupfer, Cer, Vanadium und Eisen. Die Zusammensetzung soll in Form einer Folie einer Dicke von etwa 100 Mikron bei 60 °C und einer relativen Feuchtigkeit von mindestens 80% innerhalb von 14 Tagen oxidativ zur Versprödung abbaubar sein.

US-A-3 314 813 beschreibt Polyolefine, die eine Oberfläche haben, welche die Haftfestigkeit von Tinten oder Beschichtungen erhöht. Dies wird dadurch erreicht, daß man ungesättigte Fettsäuren (Amphiphile) mit dem geschmolzenen Polyolefin in Gegenwart von Übergangsmetall-Verbindungen (z.B. Co-naphthenat) vermischt.

### Beschreibung der Erfindung

Aufgabe der vorliegenden Erfindung war es, Arbeitsmittel bereitzustellen, mit denen die Klebstoff- und/oder Beschichtungs-Kompatibilität von Polyolefin-basierten Formkörpern, Fasern und Folien nachhaltig und dauerhaft verbessert werden kann. Mit anderen Worten war es Ziel der vorliegenden Erfindung, Arbeitsmittel bereitzustellen, um eine permanente Verbesserung der Haftfestigkeit von Polyolefinoberflächen gegenüber Verklebungen und/oder Beschichtungen sicherzustellen. Die Erfindung will dabei insbesondere die Einstellung hochfester Verklebungen ermöglichen, die das Auftreten von unerwünschten Adhäsionsbrüchen ausschließen und eine Zerstörung der Klebstoffuge nur über einen Cohäsionsbruch bzw. über einen kombinierten Cohäsions/-Adhäsionsbruch sicherstellen.

Gegenstand der vorliegenden Erfindung ist die Verwendung von Amphiphilen mit Übergangsmetall-Verbindungen (II) ausgewählt aus der Gruppe Titan und Zinn zur dauerhaften Verbesserung der Klebstoff- und/oder Beschichtungs-Kompatibilität von Polyolefin-basierten Formkörpern, Fasern und Folien, wobei man eine Mischung enthaltend
a) überwiegend ein oder mehrere Polyolefine,
b) 0,01 bis 10 Gew.-% - bezogen auf die Polyolefine - ein oder mehrerer migrationsfähiger Amphiphile (Additive I) und
c) 0,01 bis 1000 ppm ein oder mehrerer Übergangsmetall-Verbindungen (II) - Metallgehalt der Übergangsmetall-Verbindungen (II) bezogen auf die Polyolefine -, worin das Übergangsmetall ausgewählt ist aus der Gruppe Titan und Zinn
bei Temperaturen im Bereich von 180 bis 320 °C auf übliche Weise einer formgebenden Verarbeitung wie Extrusions-, Kalandrier-, Spritzgußverfahren und dergleichen unterwirft.

Die erfindungsgemäßen Additive werden nachfolgend auch **Additive (I)** genannt. Es handelt sich dabei um Verbindungen amphiphiler Natur. Unter einem Amphiphil wird dabei - üblichem Sprachgebrauch folgend - eine Verbindung verstanden, die hydrophobe und hydrophile Molekülteile in sich vereinigt. Mit anderen Worten: In der Molekülstruktur der Amphiphile liegt quasi eine "Kombination" eines geeignet ausgebildeten oleophilen Grundmoleküls auf Kohlenwasserstoffbasis vor, das einen oder mehrere Substituenten mit erhöhter Polarität aufweist. Solche Substituenten erhöhter Polarität werden in bekannter Weise durch Heteroatome enthaltende Molekülbestandteile gebildet, wobei hier den Heteroatomen Sauerstoff, Stickstoff und/oder Halogen zur Ausbildung der funktionellen Gruppe(n) erhöhter Polarität besondere Bedeutung zukommt.

Durch den erfindungsgemäßen Einsatz der Amphiphile ist gewährleistet, daß Beschichtungen bzw. Verklebungen permanent und ohne zusätzliche Vorbehandlung am Kunststoff haften können. Dabei bleiben einmal eingestellte Klebstoffund/oder Beschichtungs-Kompatibilitäts-Werte über lange Zeiträume erhalten oder steigen manchmal sogar noch bei weiterführender Lagerung an. Im Hinblick auf die Klebstoffe und Beschichtungsmassen, die mit den erfindungsgemäß Oberflächen-modifizierten Polyolefinen in Kontakt gebracht werden können, so daß dabei eine dauerhafte Verklebung bzw. Beschichtung realisiert ist, gibt es erfindungsgemäß an sich keinerlei Beschränkungen. So können im Hinblick auf die Klebstoffe alle dem Fachmann vertrauten Klebstoffe, insbesondere der handelsüblichen Klebstoffe eingesetzt werden. Im Hinblick auf Beschichtungen sei insbesondere auf die Lacke aufmerksam gemacht. Lacke sind flüssige oder pulverförmig-feste Substanzen, die in dünner Schicht auf Gegenstände appliziert werden und die durch chemische Reaktion und/oder physikalische Vorgänge einen auf den Oberflächen der Objekte haftenden festen Film bilden, der dekorative und/oder schützende Funktionen hat. Weitere Beschichtungen sind beispielsweise Isoliermaterialien und Metalle.

Der Einsatz der Mischung enthaltend die Komponenten a), b) und c) erfolgt durch übliche und dem Fachmann wohlvertraute formgebende Verarbeitungstechniken wie Extrusions-, Kalandrier-, Spritzgußverfahren und dergleichen. Dabei ist es im Rahmen der Lehre der vorliegenden Erfindungen bevorzugt, wenn im Zuge der formgebenden Verarbeitung die Schmelze der Mischung enthaltend die Komponenten a), b) und c) mit Sauerstoff - insbesondere Luftsauerstoff - in Kontakt kommt. Dies ist beispielweise beim Extrudieren dann der Fall, wenn die Schmelze den Extruder durch die Austrittsdüse verläßt. Die genannte bevorzugte Ausführungsform ermöglicht, daß - gegebenenfalls katalytisch unterstützte - oxidative Prozesse, beispielsweise eine oxidativ induzierte Vernetzung - und damit letztlich Immobilisierung - olefinisch ungesättigter Molekülbestandteile der Additive (I) unter Aufbau höhermolekularer Verbindungen, eine oxidativ induzierte Oxidation aktivierter Methylengruppen, die sich in unmittelbarer Nachbarschaft zu den polaren Gruppen der Amphiphile (I) befinden, sowie weitere oxidative Reaktionen und Sekundärreaktionen stattfinden können. Dabei kann (Luft-)Sauerstoff einerseits an der Oberfläche selbst wirken, andererseits auch im Inneren des Kunststoffs - insbesondere in Oberflächen-nahen Bereichen -, wohin er durch Diffusion gelangen kann.

Die im Rahmen der Lehre der vorliegenden Erfindung geeigneten **Additive (I)** weisen relativ niedere Molekulargewichte auf - eine Voraussetzung für eine angemessen schnelle Migration. Eine Obergrenze für das Molekulargewicht geeigneter interner Additive (I) liegt bei etwa 5.000 D (Dalton), vorzugsweise bei Werten von maximal etwa 3.000 D und insbesondere bei Maximalwerten von etwa 1.000 D. Die Molekulargewichtsangabe in "Dalton" ist bekanntlich die Definition des absoluten Molekulargewichtes. Im Vergleich zu den Polyolefinen mit ihren Molekulargewichten im Millionenbereich liegen hier also vergleichsweise niedermolekulare Verbindungen vor. Die Untergrenzen für das Molekulargewicht dieser internen Additive (I) liegen bei etwa 50 bis 100 D, vorzugsweise bei 150 bis 180 D und insbesondere bei etwa 200 bis 300 D.

Durch den erfindungsgemäßen Einsatz der Amphiphile ist die Kompatibilität von nachträglich aufgebrachten Beschichtungen bzw. Verklebungen mit der Polyolefin-Oberfläche im wesentlichen zeitunabhängig gewährleistet. Der Begriff der zeitunabhängigen Gewährleistung betrifft dabei sowohl die Zeitspanne zwischen der Herstellung des jeweiligen Polyolefin-basierten Formteiles und seiner in einer getrennten Verfahrensstufe vorzunehmenden Beschichtung bzw. Verklebung der Oberfläche als auch die Zeitspanne zwischen der Herstellung der beschichteten bzw. verklebten Produkte und deren praktischen Einsatz.

Die erfindungsgemäß bevorzugten Additive (I) sind solche Amphiphile, deren hydrophobe Molekülteile wenigstens anteilsweise olefinisch ungesättigte Funktionen enthalten, die im Bereich der Kunststoffoberfläche besonders leicht radikalisch induzierten Vernetzungsreaktionen zugänglich sind. Bevorzugt werden solche Additive (I), die im nicht-abreagierten Zustand Jodzahlen von wenigstens etwa 10, vorzugsweise von wenigstens etwa 30 bis 40 und insbesondere von wenigstens etwa 45 bis 50 aufweisen. Die Wahl der Methode zur Bestimmung der Jodzahl ist dabei an sich von untergeordneter Bedeutung. Im Sinne der vorliegenden Erfindung wird jedoch ausdrücklich auf die Methoden nach Hanus bzw. Wijs, die seit langem Bestandteil der Abteilung C-V der "DGF-Einheitsmethoden" sind, sowie die dazu äquivalente Methode nach Fiebig Bezug genommen (vergl. **Fat Sci. Technol.** 1991, Nr.1, Seiten 13-19).

Wie im einzelnen noch gezeigt wird, können dabei sowohl monoolefinisch ungesättigte Kohlenwasserstoffreste als auch polyolefinisch ungesättigte Kohlenwasserstoffreste im Rahmen der erfindungsgemäß eingesetzten Additive (I) vorgesehen sein. Auch Kombinationen einer Mehrzahl entsprechender Verbindungen sind wichtige Hilfsstoffe für das erfindungsgemäße Handeln. Die jeweiligen Jodzahlen der zum Einsatz kommenden Additive (I) können dabei Werte oberhalb 80 bis 90 und insbesondere auch Werte oberhalb 100 annehmen. Hoch-ungesättigte Additivkomponenten mit Jodzahlen bis etwa 200 oder auch noch darüber, beispielsweise im Bereich von 120 bis 170, sind Hilfsstoffe im Sinne des erfindungsgemäßen Handelns.

In der Raumstruktur ihres Kohlenwasserstoffrestes können diese internen Additive (I) sowohl geradkettig, als auch verzweigt sein und/oder eine cyclische Struktur aufweisen.

Als Substituenten erhöhter Polarität kommen grundsätzlich diejenigen funktionellen Gruppen in Betracht, die sich insbesondere durch einen Gehalt an Heteroatomen und dabei wiederum bevorzugt durch einen Gehalt an O, N und/oder Halogen auszeichnen. Der Begriff der funktionellen Gruppe wird im Rahmen der vorliegenden Erfindung in seinem allgemeinsten Sinne gebraucht; hierunter werden Atomgruppierungen verstanden, die eine jeweils charakteristische Reaktionsfähigkeit aufweisen und die ein oder mehrere Heteroatome enthalten. Dementsprechend fallen unter diese Definition etwa OH-Gruppen (einfache Atomgruppierungen) oder N-haltige Heterocyclen (komplexere Atomgruppierungen), nicht jedoch C=C-Doppelbindungen (kein Heteroatom) an sich, es sei denn sie sind in komplexeren Atomgruppierungen neben den Heteroatomen mit enthalten. Lediglich beispielhaft seien hier Reste aus den Klassen Carboxyl-, Hydroxyl-, Amino-, Oxazolin-, Imidazolin-, Epoxid- und/oder Isocyanat- und/oder daraus abgeleitete Derivate benannt. In die Gruppe solcher Derivate fallen beispielsweise Estergruppen, Ethergruppen, Amidgruppen/Alkanolamin- und/oder Alkanolamidgruppierungen.

Eine im Rahmen der vorliegenden Erfindung sehr wichtige Klasse von Substituenten erhöhter Polarität sind N-haltige Heterocyclen und/oder deren Derivate. Beispiele hierfür sind Pyridazin-, Pyrimidin-, Pyrazin, Pyridin-, Azan- und Azinangruppen, besonders geeignet sind Thiazol-, Thiazolan-, Thiazolidin-, Pyrrol-, Azolan-, Azolidin-, Pyrazol- und Isooxazolgruppen, ganz besonders geeignet sind Imidazol-, Imidazolin-, Diazolidin-, Oxazolin-, Oxazol-, Oxazolidin- und Oxazolidangruppen.

Eine besonders bevorzugte Klasse von Additiven (I) sind Verbindungen, die einerseits ein oder mehrere olefinisch ungesättigte Funktionen im hydrophoben Molekülteil, andererseits extrem polare Funktionen wie Oxazolin-, Imidazolin-, Sulfonat-, Phosphonat- oder Carboxylgruppen (oder deren Salze) im hydrophilen Molekülteil enthalten.

Als Additiv (I) können individuell ausgewählte bestimmte Zusatzstoffe der hier dargestellten Art, aber auch Abmischungen einer Mehrzahl von entsprechenden Hilfsstoffen, eingesetzt werden. Durch geeignete Auswahl der Substituenten mit erhöhter Polarität an den jeweils zugesetzten Hilfsstoffen dieser Additivklasse können in vorbestimmbarer Weise die am Fertigprodukt einstellbaren Beschichtungs- bzw. Verklebungs-Kompatibilitäten beeinflußt werden. Wertstoffgemische der hier betroffenen Art sind aber auch entsprechende Stoffgemische, die sich bezüglich ihrer funktionellen Gruppe einer bestimmten Unterklasse zuordnen lassen - beispielsweise also Carboxylgruppen als Substituenten erhöhter Polarität aufweisen - dabei aber in ihrem Kohlenwasserstoffmolekül unterschiedliche Grundstrukturen aufweisen. Entsprechende Stoffmischungen fallen bekanntlich besonders dann an, wenn Stoffmischungen der hier betroffenen Art auf Naturstoffbasis eingesetzt werden. So können beispielsweise olefinisch ungesättigte Fettsäuregemische pflanzlichen und/oder tierischen Ursprungs beziehungsweise daraus abgeleitete Derivate wertvolle Zusatzstoffe von der Art der Additive (I) im Sinne der erfindungsgemäßen Lehre sein.

In dem Fachmann an sich bekannter Weise sind je nach den hier vorgegebenen Gruppen erhöhter Polarität unterschiedliche Verbesserungen der Beschichtungs- bzw. Verklebungs-Kompatibilität zu erwarten. Auf das einschlägige Fachwissen kann insoweit verwiesen werden.

Eine weitere Variationsmöglichkeit in der Ausgestaltung der erfindungsgemäßen internen Additive (I) liegt in der Anzahl der funktionellen Substituenten erhöhter Polarität am jeweiligen Kohlenwasserstoffgrundgerüst. Schon ein Substituent erhöhter Polarität kann - insbesondere nach Abstimmung der Art und Menge zur Verfügung gestellter funktioneller Gruppen - zu der angestrebten permanenten und gleichzeitig intensiven Steigerung der Beschichtungs- bzw. Verklebungs-Kompatibilität führen. Es hat sich darüber hinaus aber gezeigt, daß das Vorliegen von zwei oder mehreren solcher Substituenten erhöhter Polarität im jeweiligen Molekül des Additivs (I) ein wichtiges zusätzliches Merkmal zur Steigerung der Beschichtungs- bzw. Verklebungs-Kompatibilität sein kann.

Lediglich beispielhaft sei hier etwa verwiesen auf die Klasse der sogenannten Dimerfettsäuren. Unter Dimerfettsäuren sind dabei - wie in der Fachwelt üblich - solche Carbonsäuren zu verstehen, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus z.B. Tonerde. Die dabei erhaltenen Produkte stellen Gemische verschiedener Substanzen dar, wobei die Dimersisierungsprodukte überwiegen. Jedoch sind auch geringe Anteile höherer Oligomerer, insbesondere die Trimerfettsäuren, enthalten. Daneben enthalten die Dimerfettsäuren herstellungsbedingt auch Monomere oder monofunktionelle Fettsäuren. Dimerfettsäuren sind handelsübliche Produkte und werden in verschiedenen Zusammensetzungen und Qualitäten angeboten. Analog den Dimerfettsäuren sind auch die Trimerfettsäuren Oligomersierungsprodukte ungesättigter Fettsäuren, wobei jedoch der Anteil an Trimeren im Produkt überwiegt. Dimer- und Trimerfettsäuren verfügen über olefinische Doppelbindungen, die sie zur reaktiven Verfestigung im Bereich der Polyolefinoberfläche befähigen.

Dialkanolamine mit wenigstens anteilsweise olefinisch ungesättigten Kohlenwasserstoffresten oder Dialkanolamide ungesättigter Fettsäuren sind hochwirksame Beschichtungs- bzw. Verklebungs-Kompatibilitäts-Verbesserer im Sinne der erfindungsgemäßen Lehre. Insbesondere gilt das für die entsprechenden Diethanol-Derivate. Zu dieser Klasse gehören beispielsweise Ölsäurediethanolamid und Linolsäurediethanolamid. Ausdrücklich einbezogen sind in diesem Zusammenhang dem Fachmann bekannte technische Produkte einschließlich der darin üblicherweise auftretenden Nebenkomponenten. Beispiele hierfür sind "Comperlan OD" (technisches Ölsäurediethanolamid) und "Comperlan F" (technisches Linolsäurediethanolamid), beides bekannte Handelsprodukte der Anmelderin: Aber auch Verbindungen von der Art der Sorbitanmonoester mit insbesondere ethylenisch ungesättigten Fettsäuren führen zu optimierten Ergebnissen im Sinne des erfindungsgemäßen Handelns.

Die aufgrund der Molekülstruktur der jeweils eingesetzten Additive (I) zu erwartende Wanderungsgeschwindigkeit kann einer der Faktoren sein, der die im jeweiligen Einzelfall einzusetzende Menge dieser Additive (I) mitbestimmt. Untergrenzen für die Menge dieser Zusätze des Additivs (I) zum Polyolefin liegen bei etwa 0,01 Gew.-% und insbesondere bei etwa 0,1 Gew.-%. In der Regel wird es zweckmäßig sein wenigstens etwa 0,2 bis 0,8 Gew.-% - Gew.-% - jeweils hier bezogen auf die Polyolefine - zu verwenden. Optimierte Beschichtungs- bzw. Verklebungs-Kompatibilitäts-Werte für die jeweils im Einzelfall eingesetzten Vertreter dieser Stoffklasse zum Additiv (I) werden in der Regel im Bereich von etwa 0,3 bis 5 Gew.-% und insbesondere im Bereich von 0,4 bis etwa 1 Gew.-% eingestellt.

Wie bereits angesprochen wird begreiflicherweise die einzustellende optimale Beschichtungs- bzw. Verklebungs-Kompatibilität durch die chemische Natur und die mögliche Interaktion der Substituenten erhöhter Polarität und gegebenenfalls Reaktivität am Additiv (I) mitbestimmt. Durch die jeweils zu erwartenden Beanspruchungen im Fertigprodukt an die Bindungsfestigkeit zwischen dem Polyolefin und der aufgetragenen Beschichtung bzw. Verklebung wird hier die Auswahl der im Einzelfall einzusetzenden Additive (I) mitbestimmt.

Die Kombination der erfindungsgemäßen Lehre, die zur Ausbildung erhöhter Beschichtungs- bzw. Verklebungs-Kompatibilitäts-Werte führt, mit an sich bekannten Technologien zur Verbesserung der Beschichtungs- bzw. Verklebungs-Kompatibilität auf Polyolefinoberflächen fällt in den Rahmen der erfindungsgemäßen Lehre. So können sowohl mechanische wie chemische und/oder physikalische Oberflächenbehandlungen der Polyolefinaußenfläche mit den erfindungsgemäß ausgebildeten Modifizierungen der Beschichtungs- bzw. Verklebungs-Kompatibilität verbunden werden. Erforderlich ist das allerdings in aller Regel nicht.

Wie bereits gesagt werden die Additive (I) bei der formgebenden Verarbeitung der Polyolefine in Kombination mit **Übergangsmetall-Verbindungen (II)** eingesetzt. Dabei beträgt die Menge der Übergangsmetall-Verbindung (II) - Metallgehalt der Übergangsmetall-Verbindung (II) bezogen auf die Polyolefine - 0,01 bis 1000 ppm. Im Hinblick auf die Art der Übergangsmetall-Verbindungen (II) besteht dabei an sich keine besondere Einschränkung. Demnach können im Rahmen der Lehre der vorliegenden Erfindung prinzipiell alle dem Fachmann bekannten Übergangsmetallverbindungen eingesetzt werden. In einer Ausführungsform setzt man als Übergangsmetall-Verbindungen (II) Übergangsmetallsalze ein, vorzugsweise Salze auf Basis von organischen Säuren mit 8 bis 22 C-Atomen. In einer weiteren Ausführungsform setzt man die Übergansmetall-Verbindungen in einer - Menge ein, die unterhalb von 5 ppm - Metallgehalt der Übergangsmetall-Verbindung (II) bezogen auf die Polyolefine - liegt.

Gewünschtenfalls setzt man neben den genannten obligatorischen Übergangsmetall-Verbindungen (II) noch weitere Verbindungen ein, die dem Fachmann als Katalysatoren für oxidative Prozesse bekannt sind.

In einer bevorzugten Ausführungsform stellt man das Gewichtsverhältnis der Additive (I) zu dem Metallgehalt der Übergangsmetall-Verbindungen (II) im Bereich von 10 : 0,1 und 10 : 10⁻⁷ ein. Bevorzugt ist ein Bereich von 10 : 0,02 und 10:10⁻⁶ und insbesondere 10 : 0,01 und 10 : 10⁻⁵.

Im Hinblick auf die Lehre der eingangs abgehandelten EP-B-616 622 gilt folgendes:

Durch das technische Handeln im Sinne der erfindungsgemäßen Lehre wird einerseits sichergestellt, daß die angestrebte verbesserte und dauerhafte Beschichtungs- bzw. Verklebungs-Kompatibilität erreicht wird, andererseits, daß dies ohne Beeinträchtigung anderer Werkstoffparameter gelingt.

In einer bevorzugten Ausführungsform werden die Übergangsmetall-Verbindungen (II) in Kombination mit solchen Additiven (I) eingesetzt, die ausgewählt sind aus der Klasse der Diethanolamide ungesättigter Fettsäuren. Wie bereits ausgeführt werden die Diethanolamide vorzugsweise als technische Ware eingesetzt.

Die erfindungsgemäße Verwendung der amphiphilen Additive (I) geschieht im **Rahmen üblicher formgebender Verarbeitungsprozesse** wie Extrusions-, Kalandrier-, Spritzgußverfahren und dergleichen. Dabei kann es gewünscht sein, eine vorkonfektionierte Mischung der Komponenten a), b) und c) einzusetzen. Mitverwendete weitere übliche Hilfsstoffe, die sich bei der Verarbeitung von Kunststoffen allgemein bewährt haben und die dem Fachmann bekannt sind, beispielsweise Slipmittel, Antistatika, Gleitmittel, Trennmittel, UV-Stabilisatoren, Antioxidantien, Füllstoffe, Brandschutzmittel, Entformungsmittel, Nukleirungsmittel und Antiblockmittel können entsprechend in getrennter Form vorkonfektioniert und bei der abschließenden Aufmischung der Fertigprodukte zugegeben werden. Es kann aber - beispielsweise bei Anwendung der Extrudiertechnik - auch gewünscht sein, die Komponenten b) und/oder c) und/ oder andere Additive ganz oder teilweise direkt in die Polyolefinschmelze am Extruder einzudosieren, so daß die Mischung der Komponenten a), b) und c) - und gegebenenfalls weiterer Hilfsstoffe - nicht schon von vornherein als Vorkonfektionat vorhanden ist, sondern erst im Extruder selbst vorliegt. Eine derartige Technik bietet sich beispielsweise dann an, wenn die der Polymerschmelze zuzudosierenden Additive (I) in flüssiger Form vorliegen und ein Einspritzen dieser Komponente einfacher ist, als eine Vorkonfektionierung.

Es kann auch gewünscht sein - obgleich zur Erzielung des erfindungsgemäßen Effektes nicht erforderlich - im Anschluß an den erfindungsgemäßen Einsatz der Komponenten a) - c) - auf übliche Weise eine Corona- oder Plasmabehandlung vorzunehmen.

Als oleophiles **Polyolefin-Basismaterial** eigenen sich an sich alle heute bekannten Polymer- und Copolymertypen auf Ethylen- beziehungsweise Propylen-Basis.

Auch Abmischungen reiner Polyolefine mit Copolymeren sind grundsätzlich geeignet, so lange die Migrationsfähigkeit der Additive (I) im Sinne der erfindungsgemäßen Erfindung erhalten bleibt und damit ihre Anreicherung im Bereich der Feststoffoberflächen sichergestellt ist. Für die erfindungsgemäße Lehre besonders geeignete Polymertypen sind in der nachfolgenden Zusammenstellung aufgezählt:

Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vernetztes Polyethylen), HPPE (high pressure polyethylene); isotaktisches Polypropylen; syndiotaktisches Polypropylen; Metallocen-katalysiert hergestelltes Polypropylen, schlagzäh-modifiziertes Polypropylen, Random-Copolymere auf Basis Ethylen und Propylen, Blockcopolymere auf Basis Ethylen und Propylen; EPM (Poly[ethylen-co-propylen]); EPDM (Poly[ethylen-copropylen-co-nichtkonjugiertes Dien]).

Weitere geeignete Polymertypen sind: Poly(styrol); Poly(methylstyrol); Poly(oxymethylen); Metallocen-katalysierte alpha-Olefin- oder Cycloolefin-Copolymere wie Norbornen-Ethylen-Copolymere; perfluorierte Polyolefine, Polyvinylchlorid, Acrylnitril-Butadien-Styrol-Copolymere (ABS), Styrol-Butadien-Styrol- bzw. Styrol-Isopren-Styrol-Copolymere (SIS bzw. SBS); Copolymere, die zu mindestens 80 % Ethylen und/oder Styrol enthalten und zu weniger als 20 % Monomere wie Vinylacetat, Acrylsäureester, Methacrylsäureester, Acrylsäure, Acrylnitril, Vinylchlorid. Beispiele solcher Polymeren sind: Poly(ethylen-coethylacrylat), Poly(ethylen-co-vinylacetat), Poly(ethylen-co-vinylchlorid), Poly(styrol-co-acrylnitril). Geeignet sind weiterhin Pfropfcopolymere sowie Polymerblends, das heißt, Mischungen von Polymeren, in denen unter anderem die vorgenannten Polymere enthalten sind, beispielsweise Polymerblends auf Basis von Polyethylen und Polypropylen.

Im Rahmen der vorliegenden Erfindung sind Homo-und Copolymere auf Basis von Ethylen und Propylen besonders bevorzugt. In einer Ausführungsform der vorliegenden Erfindung setzt man dementsprechen als Polyolefin ausschließlich Polyethylen ein, in einer anderen Ausführungsform ausschließlich Polypropylen, in einer weiteren Ausführungsfrom Copolymere auf Basis von Ethylen und Propylen.

Das Aufbringen von Beschichtungen oder Verklebungen der nach dem erfindungsgemäßen Verfahren erhaltenen Oberflächen-modifizierten Polyolefin-basierten Formkörper und Folien kann an sich nach allen dem Fachmann bekannten einschlägigen Methoden erfolgen.

Hinsichtlich der Natur der Formkörper unterliegt die vorliegende Erfindung keinerlei Beschränkungen. Beispiele sind Gebrauchsgegenstände wie Stoßfänger, Drahtbeschichtungen, Abstandshalter für Isolierglas, Auto-Zierleisten, In-Mould-Labels, Flaschen, Kunststoffprofile, Flaschenkästen, Kunststoffboxen, Spielzeuge, Windelfolien, Verschalungen, Gehäuse für elektronische bzw. elektrische Geräte, medizinische Utensilien, Schuhe bzw. Teile von Schuhen , Kunststofftüten, Luftballons.

Ein weiterer Gegenstand der Erfindung ist ein **Verfahren** zur Herstellung von verklebten und/oder beschichteten Polyolefin-basierten Formkörpern, Fasern und Folien, wobei man man eine Mischung enthaltend
a) überwiegend ein oder mehrere Polyolefine,
b) 0,01 bis 10 Gew.-% - bezogen auf die Polyolefine - ein oder mehrerer migrationsfähiger Amphiphile (Additive I) und
c) 0,01 bis 1000 ppm ein oder mehrerer Übergangsmetall-Verbindungen (II) - Metallgehalt der Übergangsmetall-Verbindungen (II) bezogen auf die Polyolefine -, worin das Übergangsmetall ausgewählt ist aus der Gruppe Titan und Zinn
bei Temperaturen im Bereich von 180 bis 320 °C auf übliche Weise einer formgebenden Verarbeitung wie Extrusions-, Kalandrier-, Spritzgußverfahren und dergleichen unterwirft und die dabei erhaltenen Polyolefin-basierten Formkörpern, Fasern und Folien mit verbesserter Klebstoff- und/oder Beschichtungs-Kompatibilität anschließend auf übliche Weise mit einem Klebstoff und/oder einer Beschichtungsmasse in Kontakt bringt.

Die folgenden Beispiele dienen der Verdeutlichung der Erfindung und sind nicht einschränkend zu verstehen.

### Beispiele

### 1. Eingesetzte Materialien:

### 1.1. Polyolefin

In allen Versuchen wude als hochmolekulares Polyolefin ein **Polypropylen-Granulat** eingesetzt (Handelsprodukt "Hostalen PPH 2150" der Firma Hoechst AG).

### 1.2. Additive (I)

- Add-1:: 1-Aminoethyl-2-oleyl-imidazolin
- Add-2:: Oxazolin der Ricinusfettsäure (Handelsprodukt "Loxamid VEP 8513" der Firma Henkel KGaA, Düsseldorf)
- Add-3:: selektiv gehärtete Talgfettsäure (Handelsprodukt "Edenor HTiCT" der Firma Henkel KGaA, Düsseldorf)

### 1.3. Übergangsmetall-Verbindungen (II)

- Ni-acac:: Nickel-Acetylacetonat (enthält 6 Gew.-% Ni)
- Ti-lig:: Mischung aus Titan-(IV)-acetylacetonat/-dibutylat und Kobalt-2-ethylhexanoat (enthält 2,5 Gew.-% Co und 4,0 Gew.-% Ti)
- Sn-lig:: Mischung aus Zinn-(II)-acetat und Kobalt-2-ethylhexanoat (enthält 2,5 Gew.-% Co und 4,0 Gew.-% Sn)

### 2. Herstellung von Oberflächen-modifiziertem Polypropylen gemäß dem Verfahren der Erfindung

Zur Überprüfung der Klebstoff-Kompatibilitäts-Eigenschaften von Oberflächen-modifiziertem Polypropylen wurden zunächst Polypropylen-Bänder hergestellt. Dazu wurden jeweils
- 600 g Polypropylen-Granulat mit
- 9,0 g (=1,5%) Additiv (I) und
- 0,1 g Übergangsmetall-Verbindung (II)
vermengt. Das jeweils eingesetzte Additiv (I) und die Übergangsmetallverbindung (II) ist den Daten der Tabellen 1 bis 3 zu entnehmen. Diese Mischungen wurden durch einen Trichter in einen Extruder eingebracht. Eingesetzt wurde dabei ein Doppelschneckenextruder DSK 42/7 der Firma Brabender OHG (Duisburg).

Ein Extruder ist - wie dem Fachmann hinlänglich bekannt - eine Kunststoff-Verarbeitungsmaschine, welche zum kontinuierlichen Mischen und Plastifizieren sowohl von pulver- als auch granulatförmigen Thermoplasten geeignet ist.

Unter dem Einfülltrichter befindet sich neben einer Wasserkühlung, die ein verfrühtes Schmelzen des Granulates bzw. Pulvers verhindern soll, auch eine gegenläufige Doppelschnecke, die der Länge nach in drei Heizzonen aufgeteilt ist. Die Temperatur der Heizzonen und die Drehzahl der Doppelschnecke lassen sich über einen Datenverarbeitungs-Plast-Corder PL 2000 regeln, der über eine PC-Schnittstelle mit dem Extruder verbunden ist.

Für die Herstellung der Polypropylenbänder wurden die folgenden Temperaturen eingestellt: Heizzone I: 250°C, Heizzone II: 270°C, Heizzone III: 290°C, wobei die drei Heizzonen luftgekühlt waren, um die Temperaturen konstant zu halten.

Das Polypropylen-Granulat (inclusive des jeweiligen Additivs I und der Übergangsmetall-Verbindung II) wurde automatisch durch die gegeneinander laufende Doppelschnecke in den Extruder eingezogen und entlang der Schnecke befördert. Die Drehzahl betrug dabei 25 Umdrehungen pro Minute. Dadurch war eine relativ lange Verweilszeit im Extruder und dementsprechend eine gute Durchmischung und Homogenisierung gewährleistet. Diese homogene und praktisch bläschenfreie Mischung gelangte schließlich in eine Düse, die eine vierte Heizzone darstellt. Die Temperatur der Düse betrug 300 °C - bei dieser Temperatur verließ also die jeweilige Mischung den Extruder.

Nach dem Austritt aus der Düse floß die heiße Mischung auf ein Transportband, dessen Geschwindigkeit so eingestellt wurde, daß beim Abkühlen an der Luft ein glattes und gleichmäßig dickes und breites Band entstand. Bei den hier beschriebenen Arbeiten wurde die Geschwindigkeit so eingestellt, daß das Polypropylenband etwa 35 mm breit und etwa 0,35 mm dick war. Aus diesem Material wurden quadratische Prüfkörper (25 x 25 mm) ausgestanzt und für die unten näher beschriebenen Klebeversuche eingesetzt.

Zu Vergleichszwecken wurden Prüfkörper aus reinem Polypropylen eingesetzt. Die Herstellung erfolgte durch die gerade beschriebene Extrusions-Technik. wobei jedoch ausschließlich Polypropylen-Granulat ohne Zusatz von Additiv (I) und Übergangsmetall-Verbindungen (II) eingesetzt wurde. Die auf diesem Material basierendenVersuchsergebnisse sind in Tabelle 1 der ersten Spalte jeweils durch die Angabe "Vergl." kenntlich gemacht.

### 3. Klebe- und Zerreiß-Versuche

### 3.1. Herstellung der Prüflinge

Die gemäß 2) hergestellten extrudierten Bänder wurden zum einen bei Raumtemperatur (20 °C) und zum anderen im Trockenschrank bei 60 °C für unterschiedliche Zeiträume gelagert. Anschließend wurden quadratische Polypropylenstücke von *25* x 25 mm zwischen zwei Holzbrettchen mit den Maßen 100 x 25 mm verklebt. Die Verklebung hatte dabei eine Dicke von 2 mm. Die Klebefläche betrug exakt 25 x 25 = 625 mm².

Die Prüflinge seien durch folgende (nicht Maßstabs-gerechte) Querschnitt-Skizze veranschaulicht:

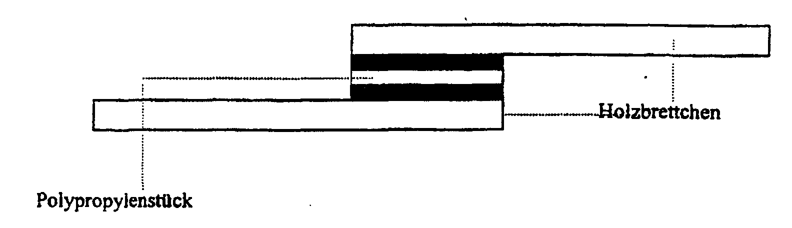

In der Skizze sind Holzbrettchen und Polypropylenstück weiß dargestellt, der Klebstoff schwarz. Aus dieser Skizze geht die Anordnung "Holzbrettchen-Klebstoff-Polypropylenstück-Klebstoff-Holzbrettchen" deutlich hervor.

Als Klebstoff wurde dabei ein Zweikomponentenklebstoff eingesetzt (Polyurethan-Kleber "Makroplast" der Firma Henkel KGaA/Düsseldorf). Dazu wurden in einer Aluminiumschale die beiden Reaktivkomponenten im Verhältnis von 5:1 angerührt. Die Topfzeit betrug etwa 1 Stunde.

Nach entsprechender Lagerung wurden von jedem Band Streifen mit einer Breite von 25 mm abgeschnitten und mit Hilfe einer Schablone zwischen zwei Holzbrettchen beidseitig verklebt. Es wurden dabei 5 Verklebungen von jedem Kunststoffband angefertigt. Die Verwendung einer Schablone garantierte dabei die Einhaltung der gewünschten Klebefläche zwischen dem modifiziertem Kunststoff und den Brettchen. Zur Fixierung des Prüflings wurden dabei Holzklammern verwendet. Überschüssiger Kleber wurde entfernt.

### 3.2. Zerreiß-Versuche

Die gemäß 3.1.) hergestellten Prüflinge wurden etwa 3 bis 4 Tage bei 20 °C gelagert, um sicherzustellen, daß der Zweikomponentenklebstoff völlig ausgehärtet war. Zur Messung der Zugscherkräfte wurde anschließend eine Universalprüfmaschine der Firma Zwick verwendet. Die Geschwindigkeit, mit der der Prüfling auf Zug beansprucht wurde, betrug 15 mm/min. Die verklebten Holzspatel (= Prüflinge) wurden in die Klemmbacken der Universalprüfinaschine eingespannt und mit der vorgegebenen Prüfgeschwindigkeit auseinandergezogen. Dabei wurde sichergestellt, daß die Prüflinge stets senkrecht und exakt in der Mitte des Prüfgerätes angeordnet waren. Die erzielten Versuchsergebnisse sind in Tabelle 1 zusammengestellt. Sämtliche Ergebnisse sind Mittelwerte aus jeweils 5 Versuchen.

**Tabelle 1:**

| Ergebnisse der Zerreißversuche (Ermittlung der Zugscherfestigkeiten) | | | | | |
|---|---|---|---|---|---|
| Nr. | Additiv (I) | Übergangsmetall-Verbindung | Lagerung | | ZSG-Wert(x) |
| | | | Tage | °C | |
| Vergl | ohne | ohne | 1 | 20 | 0,23 |
| Vergl | ohne | ohne | 7 | 60 | 0.21 |
| B7 | Add-2 | Ti-lig | 1 | 20 | 0.95 |
| B8 | Add-2 | Ti-lig | 7 | 60 | 1.50 |
| B9 | Add-2 | Sn-lig | 1 | 20 | 1,21 |
| B10 | Add-2 | Sn-lig | 7 | 60 | 1,35 |
| B11 | Add-1 | Ti-lig | 1 | 20 | 1,12 |
| B12 | Add-1 | Ti-lig | 7 | 60 | 1,34 |

| | | | | | |
|---|---|---|---|---|---|
| **(x) ZSG-Wert = Zugscherfestigkeit (Angaben in Newton pro Quadratmillimeter)** | | | | | |

## Patentansprüche

1. **Verwendung** von Amphiphilen zur dauerhaften Verbesserung der Klebstoffund/oder Beschichtungs-Kompatibilität von Polyolefin-basierten Formkörpern, Fasern und Folien, wobei man eine Mischung enthaltend
a) überwiegend ein oder mehrere Polyolefine,
b) 0,01 bis 10 Gew.-% - bezogen auf die Polyolefine - ein oder mehrerer migrationsfähiger Amphiphile (Additive I) und
c) 0,01 bis 1000 ppm ein oder mehrerer Übergangsmetall-Verbindungen (II) - Metallgehalt der Übergangsmetall-Verbindungen (II) bezogen auf die Polyolefine -, worin das Übergangsmetall ausgewählt ist aus der Gruppe Titan und Zinn.
bei Temperaturen im Bereich von 180 bis 320 °C auf übliche Weise einer formgebenden Verarbeitung wie Extrusions-, Kalandrier-, Spritzgußverfahren und dergleichen unterwirft.

2. Verwendung nach Anspruch 1, wobei man solche Additive (I) einsetzt, die Molgewichte im Bereich von 50 bis 3000 D aufweisen.

3. Verwendung nach Anspruch 1 oder 2, wobei man solche Additive (I) einsetzt, die Jodzahlen im Bereich von 10 bis 200 aufweisen.

4. Verwendung nach einem der Ansprüche 1 bis 3, wobei man solche Additive (I) einsetzt, die als Substituenten erhöhter Polarität Reste aus den Klassen Carboxyl-, Hydroxyl-, Amino-, Oxazolin-, Imidazolin-, Epoxid- und/oder Isocyanat- und/oder Reste daraus abgeleiteter Derivate, insbesondere Ester-, Ether-, Amid-, Alkanolamin- und/oder Alkanolamidgruppen vorliegen, aufweisen.

5. Verwendung nach einem der Ansprüche 1 bis 4, wobei man die Übergangsmetall-Verbindungen (II) auswählt aus der Gruppe der Übergangsmetallsalze.

6. Verwendung nach einem der Ansprüche 1 bis 5, wobei man die die Übergangsmetall-Verbindungen (II) in einer Menge einsetzt, die unterhalb von 5 ppm - Metallgehalt der Übergangsmetall-Verbindungen (II) bezogen auf die Polyolefine - liegt.

7. Verwendung nach einem der Ansprüche 1 bis 6, wobei man das Gewichtsverhältnis der Additive (I) zu dem Metallgehalt der Übergangsmetall-Verbindungen (II) im Bereich von 10 : 0,1 und 10 : 10⁻⁷ einstellt.

8. Verwendung nach einem der Ansprüche 1 bis 7, wobei man als Polyolefin ausschließlich Polyethylen oder Polypropylen oder ein Ethylen-Propylen-Copolymer einsetzt.

9. Verwendung nach einem der Ansprüche 1 bis 8, wobei bei der formgebenden Verarbeitung der Polyolefine übliche weitere Hilfsstoffe zusetzt und/oder als zusätzlichen weiteren Verarbeitungsschritt auf übliche Weise eine Coronaoder Plasmabehandlung vornimmt.

10. Verfahren zur Herstellung von verklebten und/oder beschichteten Polyolefin-basierten Formkörpern, Fasern und Folien, **dadurch gekennzeichnet, daß** man eine Mischung enthaltend
a) überwiegend ein oder mehrere Polyolefine,
b) 0,01 bis 10 Gew.-% - bezogen auf die Polyolefine - ein oder mehrerer migrationsfähiger Amphiphile (Additive I) und
c) 0,01 bis 1000 ppm ein oder mehrerer Übergangsmetall-Verbindungen (II) - Metallgehalt der Übergangsmetall-Verbindungen (II) bezogen auf die Polyolefine -, worin das Übergangsmetall ausgewählt ist aus der Gruppe Titan und Zinn
bei Temperaturen im Bereich von 180 bis 320 °C auf übliche Weise einer formgebenden Verarbeitung wie Extrusions-, Kalandrier-, Spritzgußverfahren und dergleichen unterwirft und die dabei erhaltenen Polyolefin-basierten Formkörper, Fasern und Folien mit verbesserter Klebstoff- und/oder Beschichtungs-Kompatibilität anschließend auf übliche Weise mit einem Klebstoff und/oder einer Beschichtungsmasse in Kontakt bringt.

## Claims

1. The use of amphiphiles for permanently improving the adhesive and/or coating compatibility of polyolefin-based moldings, fibers and films, **characterized in that** a mixture containing
a) predominantly one or more polyolefins,
b) 0.01 to 10% by weight, based on the polyolefins, of one or more migratable amphiphiles (additives I) and
c) 0.01 to 1000 ppm of one or more transition metal compounds (II) - metal content of the transition metal compounds (II) based on the polyolefins - in which the transition metal is selected from the group consisting of titanium and tin
is conventionally molded by extrusion, calendering, injection molding or the like at temperatures in the range from 180 to 320°C.

2. The use claimed in claim 1, **characterized in that** additives (I) with molecular weights of 50 to 3,000 D are used.

3. The use claimed in claim 1 or 2, **characterized in that** additives (I) with iodine values of 10 to 200 are used.

4. The use claimed in any of claims 1 to 3, **characterized in that** additives (I) containing as substituents of high polarity residues from the classes of carboxyl, hydroxyl, amino, oxazoline, imidazoline, epoxide and/or isocyanate groups and/or residues of derivatives thereof, more particularly ester, ether, amide, alkanolamine and/or alkanolamide groups, are used.

5. The use claimed in any of claims 1 to 4, **characterized in that** the transition metal compounds (II) are selected from the group of transition metal salts.

6. The use claimed in any of claims 1 to 5, **characterized in that** the transition metal compounds (II) are used in a quantity of less than 5 ppm - metal content of the transition metal compounds (II) based on the polyolefins.

7. The use claimed in any of claims 1 to 6, **characterized in that** the ratio by weight of the additives (I) to the metal content of the transition metal compounds (II) is adjusted to a value of 10:0.1 to 10:10⁻⁷.

8. The use claimed in any of claims 1 to 7, **characterized in that** polyethylene on its own or polypropylene on its own or an ethylene/propylene copolymer is used as the polyolefin.

9. The use claimed in any of claims 1 to 8, **characterized in that** other typical auxiliaries are added during the molding of the polyolefins and/or a corona or plasma treatment is conventionally carried out as an additional processing step.

10. A process for the production of bonded and/or coated polyolefin-based moldings, fibers and films, **characterized in that** a mixture containing
a) predominantly one or more polyolefins,
b) 0.01 to 10% by weight, based on the polyolefins, of one or more migratable amphiphiles (additives I) and
c) 0.01 to 1000 ppm of one or more transition metal compounds (II) - metal content of the transition metal compounds (II) based on the polyolefins - in which the transition metal is selected from the group consisting of titanium and tin
is conventionally molded by extrusion, calendering, injection molding and the like at temperatures of 180 to 320°C and the resulting polyolefin-based moldings, fibers and films with improved adhesive and/or coating compatibility are then contacted with an adhesive and/or a coating composition by conventional methods.

## Revendications

1. Application d'amphiphiles pour améliorer de manière permanente la compatibilité de produits moulés, de fibres et de films à base de polyoléfines, avec un adhésif et/ou un revêtement selon laquelle on soumet un mélange contenant
a) principalement une ou plusieurs polyoléfines,
b) entre 0,01 jusqu'à 10 % en poids par rapport aux polyoléfines, d'un ou plusieurs amphiphiles susceptibles de migrer (additif I) et
c) entre 0,01 et 1000 ppm d'une ou plusieurs combinaisons de métaux de transition (II) dont la teneur en métal est rapportée aux polyoléfines, le métal de transition étant choisi dans le groupe du titane et de l'étain,
à un traitement de mise en forme tel que des procédés d'extrusion, de calandrage et d'injection ou analogues d'une manière habituelle à des températures de l'ordre de 180 à 320°C.

2. Application selon la revendication 1,
selon laquelle
on emploie des additifs (I) d'un poids moléculaire de l'ordre de 50 à 3000 D.

3. Application selon les revendications 1 ou 2,
selon laquelle
on emploie des additifs (I) ayant un indice d'iode compris entre 10 et 200.

4. Application selon l'une des revendications 1 à 3, consistant à employer des additifs (I) ayant comme substituants de polarité élevée des radicaux des groupes carboxyle, hydroxyle, amino, oxazoline, imidazoline, époxide et/ou isocyanate et/ou des dérivés a de tels radicaux, en particulier des groupes ester, éther, amide, alcanolamine et/ou des groupes alcanolamide.

5. Application selon l'une des revendications 1 à 4,
selon laquelle
on sélectionne les combinaisons des métaux de transitions (II) dans le groupe des sels de métaux de transition.

6. Application selon l'une des revendications 1 à 5,
selon laquelle
on emploie les combinaisons de métaux de transition (II) en une quantité telle que la teneur en métal de transition de ces combinaisons (II) soit inférieure à 5 ppm par rapport aux polyoléfines.

7. Application selon l'une des revendications 1 à 6,
selon laquelle
on règle le rapport pondéral entre l'additif (I) et la teneur en métal des combinaisons de métaux de transition (II) dans une plage comprise entre 10 :0,1 et 10 :10⁻⁷.

8. Application selon l'une des revendications 1 à 7,
selon laquelle
on utilise exclusivement comme polyoléfines du polyéthylène ou du polypropylène ou un copolymère éthylène-propylène.

9. Application selon l'une des revendications 1 à 8,
selon laquelle
pour le traitement de mise en forme des polyoléfines on ajoute d'autres additifs habituels et/ou on effectue de manière habituelle un traitement à effet Corona ou au plasma en tant qu'autres étapes de traitement supplémentaires.

10. Application pour la réalisation de produits moulés de fibres et de films à base de polyoléfines, avec collage et/ou revêtement,
**caractérisée en ce qu'**
on utilise un mélange contenant
a) principalement une ou plusieurs polyoléfines,
b) entre 0,01 jusqu'à 10 % en poids par rapport aux polyoléfines, d'un ou plusieurs amphiphiles susceptibles de migrer (additif I) et
c) entre 0,01 et 1000 ppm d'une ou plusieurs combinaisons de métaux de transitions (II) dont la teneur en métal est rapportée aux polyoléfines, le métal de transition étant choisi dans le groupe du titane et de l'étain,
à un traitement de mise en forme tel que des procédés d'extrusion, de calandrage et d'injection ou analogues d'une manière habituelle à des températures de l'ordre de 180 à 320°C,
et on met ensuite les produits moulés, les fibres ou les films à base de polyoléfines ainsi obtenus, ayant une meilleure compatibilité avec un adhésif et/ou un revêtement, de manière habituelle en contact avec une masse d'adhésif et/ou une masse de revêtement.
